# EUROPÄISCHE PATENTSCHRIFT

(11) **EP 0 780 591 B1**
(45) Veröffentlichungstag und Bekanntmachung des Hinweises auf die Patenterteilung: **10.05.2000**
(21) Anmeldenummer: 96890176.9
(22) Anmeldetag: 27.11.1996
(51) Int. Cl.: F16D 48/02

(54) **Schaltkupplung für ein Motorrad**
Clutch for a motorcycle
Embrayage pour motocyclette

(30) Priorität: 22.12.1995 AT 209295
(43) Veröffentlichungstag der Anmeldung: 25.06.1997
(73) Patentinhaber: Bombardier-Rotax Gesellschaft m.b.H., A-4623 Gunskirchen (AT)
(72) Erfinder: Korenjak, Norbert, Ing., 4651 Stadl-Paura (AT); Holweg, Claus, Ing., 8850 Murau (AT)
(74) Vertreter: Hübscher, Heiner, Dipl.-Ing.

(56) Entgegenhaltungen:
- EP-A- 0 098 749
- EP-A- 0 191 150
- EP-A- 0 193 502
- DE-A- 3 146 738
- US-A- 5 469 946

## Beschreibung

Die Erfindung bezieht sich auf eine Schaltkupplung für ein Motorrad mit ineinandergreifenden, einem Innen- und einem Außenkorb zugeordneten Lamellen und mit einer Ausrückeinrichtung für einen durch wenigstens eine Kupplungsfeder belasteten Druckkörper zum Anpressen der Lamellen.

Da Schaltkupplungen im allgemeinen ein gleichbleibendes, vom größten zu übertragenden Drehmoment abhängiges Rutschmoment aufweisen, ergeben sich bei Motorrädern insbesondere höherer Leistung im Teillastbereich und im Schubbetrieb Schwierigkeiten, weil mit abnehmendem Motordrehmoment die Schaltkupplung zunehmend eine starre Antriebsverbindung zwischen Motor und angetriebenem Hinterrad mit der Folge darstellt, daß das Hinterrad zum Ausbrechen und Springen neigt. Die Bodenhaftung des Hinterrades reicht in diesen Fällen nicht mehr aus, dem Motor über das Hinterrad einen gleichförmigen Lauf aufzuzwingen, so daß sich motorseitige Antriebsstöße und Unregelmäßigkeiten ungedämpft auf das Hinterrad übertragen können. Um diese Nachteile im Schubbetrieb, also bei einer Bremsung des Motorrades über den Motor, zu vermeiden, wurde bereits vorgeschlagen, die Schaltkupplung mit einem Freilauf auszurüsten, der im Schubbetrieb einen Teil der ineinandergreifenden Kupplungslamellen ausrückt, was eine entsprechende Verringerung des Rutschmomentes zur Folge hat. Eine andere Möglichkeit, das Rutschmoment der Schaltkupplung im Schiebebetrieb herabzusetzen, besteht darin, über an einem Mitnehmer vorgesehene Nocken eine Kupplungsverstellung im Sinne einer Entlastung der Kupplungslamellen zu erreichen. Die Verringerung des Rutschmomentes der Schaltkupplung wird bei beiden Ausführungsformen jedoch nur im Schubbetrieb wirksam, und zwar in einem vorgegebenen, nicht steuerbaren Ausmaß. Außerdem sind die vorgeschlagenen Lösungen vergleichsweise aufwendig.

Um die Schaltkräfte einer Schaltkupplung für ein Motorrad zu verringern, ist es bekannt (EP 0 098 749 A1), die die Schaltkupplung einrückende Kupplungsfeder nur für einen Teil des größten übertragbaren Drehmoments auszulegen und die restliche Kupplungskraft hydraulisch aufzubringen, so daß nach einer Verbindung der hydraulischen Druckleitung mit einer Rückleitung lediglich die Kraft der Kupplungsfeder zum Ausrücken der Kupplung überwunden werden muß. Diese wegschaltbare Hydraulikbeaufschlagung der Schaltkupplung kann auch dazu genützt werden, das übertragbare Drehmoment bei einer plötzlichen Geschwindigkeitsverminderung z. B. aufgrund eines Zurückschaltens des Getriebes zu begrenzen. Zu diesem Zweck ist ein vom Unterdruck im Ansaugrohr des Motors steuerbares Schaltventil vorgesehen, das für einen Abbau des hydraulischen Beaufschlagungsdruckes der Kupplung sorgt. Nachteilig bei dieser bekannten Schaltkupplung ist allerdings, daß das kleinste übertragbare Drehmoment durch die Kupplungsfeder bestimmt wird, die zum Antreiben der Kurbelwelle über das Hinterrad ausreichend dimensioniert werden muß. Außerdem ist keine feinfühlige Steuerung des Beaufschlagungsdruckes der Schaltkupplung möglich, weil mit der Betätigung des Schaltventiles der Hydraulikdruck im wesentlichen abgebaut wird.

Zum Ausrücken einer federbelasteten Schaltkupplung zwischen einem motorischen Antrieb und einem Kompressor ist es außerdem bekannt (EP 0 191 150 A1), einen pneumatisch beaufschlagbaren Ringkolben vorzusehen, der bei seiner Beaufschlagung die Kupplung entgegen der Kraft der Kupplungsfedern ausrückt. Da der Ringkolben von einem Druckluftbehälter über ein Steuerventil beaufschlagt wird, das in Abhängigkeit vom Ansprechen eines Druckregelventiles für den Kompressor angesteuert wird, wenn ein vorgegebener Betriebsdruck erreicht ist, wird der Ringkolben ausschließlich mit dem Druck des Druckbehälters beaufschlagt, was eine Beeinflussung der Schließkraft der Kupplung über den Ringkolben ausschließt.

Schließlich ist es bekannt (EP 0 193 502 A2), die Kupplung eines Kraftfahrzeuges über das Gaspedal anzusteuern, um eine automatische Kupplungsbetätigung zum Anfahren zu erhalten. Zu diesem Zweck wird über eine vergleichsweise aufwendige pneumatische Steuerung die Kupplung in Abhängigkeit von der Gaspedalstellung eingerückt, bis eine vorgegebene Mindestgeschwindigkeit erreicht ist, bei der diese pneumatische Steuerung ausgeschaltet wird. Durch das allmähliche Einrücken der Kupplung wird ein sanftes Anfahren sichergestellt. Nach dem vollständigen Einrücken der Kupplung ist jedoch keine Entlastung der Kupplungsfeder mehr möglich.

Der Erfindung liegt somit die Aufgabe zugrunde, eine Schaltkupplung für ein Motorrad der eingangs geschilderten Art so auszugestalten, daß die Drehmomentübertragung zwischen Motor und angetriebenem Hinterrad in einem vorgebbaren Bereich unabhängig von der Schließkraft der Kupplungsfeder einen vorteilhaften Ausgleich allfälliger antriebsseitiger Unregelmäßigkeiten erlaubt.

Die Erfindung löst die gestellte Aufgabe dadurch, daß der Druckkörper über eine Steuereinrichtung in Abhängigkeit von der Motorbelastung mit einer zur Schließkraft der Kupplungsfeder gegensinnigen Kraft beaufschlagbar ist.

Durch die zur Schließkraft gegensinnige Beaufschlagung des Druckkörpers kann die auf die Lamellen wirksam werdende Kupplungskraft gegenüber der durch die Kupplungsfeder bzw. die Kupplungsfedern aufgebrachten maximalen Schließkraft entsprechend verringert werden, so daß auch im Teillastbereich oder im Schubbetrieb das Kupplungsmoment unter Berücksichtigung der jeweiligen Betriebsbedingungen so reduziert werden kann, daß sich motorseitige, auf die Fahreigenschaften des Motorrades störend auswirkende Unregelmäßigkeiten über einen Schlupf der Kupplung ausgeglichen werden können. Zu diesem Zweck wird die zur Schließkraft gegensinnige Beaufschlagung des Druckkörpers mit Hilfe einer Steuereinrichtung in Abhängigkeit von der Motorbelastung gesteuert.

Die mögliche Einflußnahme auf die Kupplungskraft gibt außerdem Gelegenheit, das Kupplungsmoment zusätzlich in Abhängigkeit eines Betriebsparameters, beispielsweise in Abhängigkeit von der Stellung einer Getriebegangschaltung, der Drehzahl des getriebenen Hinterrades oder der Motordrehzahl, zu steuern und damit in das Fahrverhalten des Motorrades vorteilhaft einzugreifen. Der Steuereinrichtung für die Beaufschlagung des Druckkörpers brauchen hiefür lediglich diese Parameter als Führungsgrößen vorgegeben zu werden.

Um eine einfache, von der Motorbelastung abhängige Steuerung der Beaufschlagung des Druckkörpers zu erhalten, kann die Steuereinrichtung in weiterer Ausbildung der Erfindung aus einer an ein Ansaugrohr des Motors angeschlossenen, über einen Kolben oder eine Membran am Druckkörper angreifenden Unterdruckkammer bestehen. Da der Unterdruck im Ansaugrohr des Motors von dessen Belastung unmittelbar abhängt, stellt eine Beaufschlagung des Druckkörpers mit dem Unterdruck des Ansaugrohres die gewünschte Abhängigkeit der Kupplungskraft von der Motorbelastung sicher. Der Unterdruck in der Unterdruckkammer kann dabei über einen Kolben oder eine Membran unter Zwischenschaltung eines Drehlagers auf den sich mit den Lamellen mitdrehenden Druckkörper übertragen werden, wobei über die Größe der Kolben- bzw. Membranfläche die auf den Druckkörper einwirkende Kraft auf die jeweiligen Konstruktionsbedingungen abgestimmt werden kann. Ist ein zusätzlicher Betriebsparameter zu berücksichtigen, so kann zwischen dem Ansaugrohr und der Unterdruckkammer ein entsprechendes Steuerventil vorgesehen sein, über das der Unterdruck in der Unterdruckkammer geregelt werden kann.

Besonders einfache Konstruktionsverhältnisse ergeben sich, wenn das Gehäuse der Schaltkupplung einen Unterdruckraum bildet, der durch eine mit dem Druckkörper über ein Drehlager verbundene Membran abgeschlossen ist, weil in diesem Fall eine unmittelbare Druckbeaufschlagung des Druckkörpers über die Membran möglich wird. Abgesehen davon wird eine kompakte, gewichtssparende Bauform erreicht. Um eine gute Zugänglichkeit zum Unterdruckraum zu erhalten, kann der Unterdruckraum zwischen einem Gehäusedeckel und der Membran gebildet werden. Der Anschluß an das Ansaugrohr des Motors erfolgt dabei über den Gehäusedeckel.

In der Zeichnung ist der Erfindungsgegenstand beispielsweise dargestellt. Es zeigen
- Fig. 1: eine erfindungsgemäße Schaltkupplung für ein Motorrad in einem schematischen Blockschaltbild,
- Fig. 2: eine erfindungsgemäße Schaltkupplung in einem Axialschnitt in einem größeren Maßstab,
- Fig. 3: ein Diagramm, das den schematischen Drehmomentverlauf des Motors eines Motorrades über der Motordrehzahl in Abhängigkeit vom Unterdruck im Ansaugrohr veranschaulicht,
- Fig. 4: ein Diagramm, in dem der Zusammenhäng zwischen dem Drehmoment und dem Ansaugdruck im Ansaugrohr bei einer bestimmten Drehzahl zu erkennen ist, und
- Fig. 5: ein Diagramm, das die Beziehungen zwischen dem Drehmoment des Motors und dem Rutschmoment der Schaltkupplung wiederspiegelt.

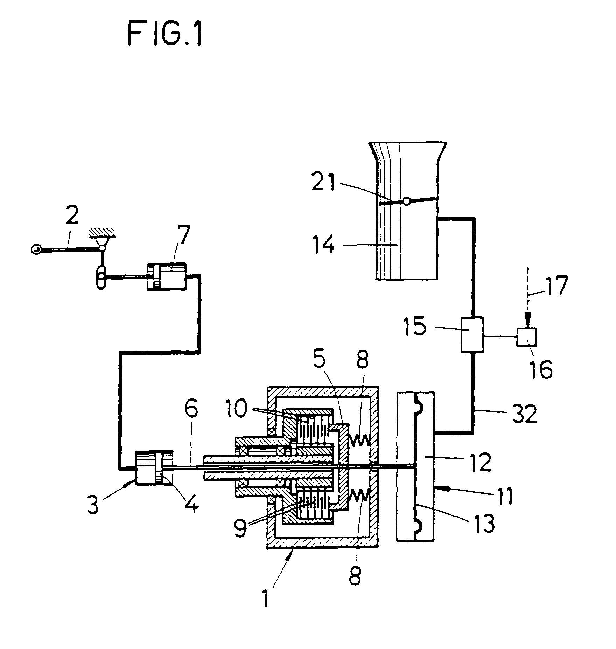

Wie dem Blockschaltbild gemäß der Fig. 1 entnommen werden kann, kann die Schaltkupplung 1 über einen im allgemeinen am Lenker des Motorrades vorgesehenen Handhebel 2 über eine Ausrückeinrichtung 3 betätigt werden, die aus einer durch einen Kolben 4 verschiebbaren, am Druckkörper 5 der Schaltkupplung 1 angreifenden Stellstange 6 besteht. Zur Beaufschlagung des Kolbens 4 dient ein über den Handhebel 2 betätigbarer Druckmittelzylinder 7, so daß beim Ziehen des Handhebels 2 der Druckkörper 5 über die Stellstange 6 gegen die Schließkraft der Kupplungsfedern 8 unter einer Entlastung der Lamellen 9 und 10 verstellt wird. Beim Loslassen des Handhebels 2 wird der Druckkörper 5 über die Kupplungsfedern 8 gegen die Lamellen 9 und 10 gedrückt und die Schaltkupplung 1 eingerückt.

Der Druckkörper 5 wird zusätzlich über eine Steuereinrichtung 11 gegensinnig zur Schließkraft der Kupplungsfedern 8 in Abhängigkeit von der Motorbelastung beaufschlagt. Zu diesem Zweck ist ein Unterdruckraum 12 vorgesehen, der über eine Membran 13 oder einen Kolben abgeschlossen wird, wobei die Membran 13 bzw. der Kolben z. B. durch die Stellstange 6 mit dem Druckkörper 5 verbunden ist. Diese Unterdruckkammer 12 ist an das Ansaugrohr 14 des Motors angeschlossen, so daß der Druckkörper 5 in Abhängigkeit vom Unterdruck im Ansaugrohr 14 entlastet wird. Zusätzlich kann der Unterdruck in der Unterdruckkammer 12 über ein Steuerventil 15 in Abhängigkeit von bestimmten Betriebsparametern gesteuert werden. Der Stelltrieb 16 für das Steuerventil 15 muß zu diesem Zweck über die Steuerleitung 17 entsprechend angesteuert werden.

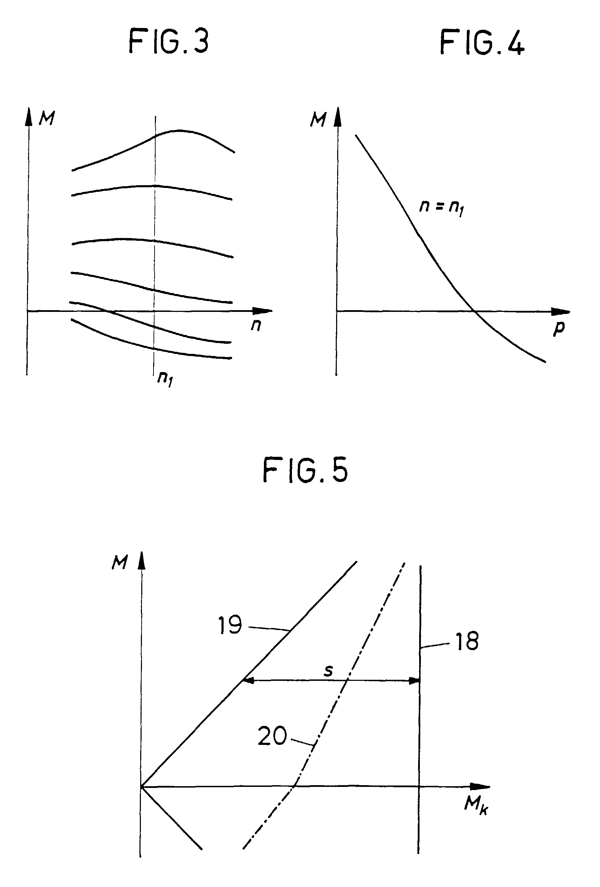

Der von der Drehzahl n abhängige Verlauf des Motordrehmomentes M eines Verbrennungsmotors bei verschiedenen Unterdrücken p im Ansaugrohr 14 ist schematisch in der Fig. 3 in einem Kennlinienfeld dargestellt. Bei einer bestimmten Drehzahl n₁ können somit den unterschiedlichen Drehmomenten M bestimmte Unterdrücke p zugeordnet werden. Diese Abhängigkeit ist in der Fig. 4 dargestellt, bei der auf der Abszisse der Unterdruck p im Ansaugrohr 14 und auf der Ordinate das Drehmoment M für die Drehzahl n₁ aufgetragen wurden. Die erhaltene Kennlinie zeigt unmittelbar, daß der Unterdruck p im Ansaugrohr 14 des Motors als Maß für die Motorbelastung herangezogen werden kann, insbesondere wenn zusätzlich über das Steuerventil 16 die jeweilige Motordrehzahl n berücksichtigt wird.

Die Wirkung der Entlastung des Druckkörpers 5 in Abhängigkeit von der Motorbelastung kann anhand der Fig. 5 veranschaulicht werden, die ein Koordinatensystem zeigt, auf dessen Ordinate das Drehmoment M und auf dessen Abszisse das Kupplungsmoment Mₖ abgelesen werden kann. Das durch die Kupplungsfedern 8 bedingte konstante Kupplungsmoment wird durch die Linie 18 dargestellt. Die Rutschgrenze 19 würde jeweils dann erreicht werden, wenn das wirksame Kupplungsmoment unter Berücksichtigung der Übersetzungsverhältnisse in der Antriebsverbindung zwischen Motor und Kupplung gerade dem wirksamen Motordrehmoment M entspricht. Der in Richtung der Abszisse gemessene Abstand s zwischen den Linien 18 und 19 bestimmt somit gewissermaßen die Sicherheit gegenüber einem Rutschen der Kupplung. Je größer das Motormoment M wird, umso kleiner wird diese Sicherheit. Dies bedeutet, daß im Teillastbereich oder im Schubbetrieb, der durch die Kurven unterhalb der Abszisse gekennzeichnet wird, die Schaltkupplung zunehmend eine starre Verbindung darstellt, die zu Schwierigkeiten im Fahrverhalten führen kann, weil motorseitige Unregelmäßigkeiten nicht über die Schaltkupplung ausgeglichen werden können. Solche Unregelmäßigkeiten machen sich in kurzzeitigen Drehmomentbelastungen der Kupplung bemerkbar, so daß dann ein Ausgleich dieser Unregelmäßigkeiten erreicht werden kann, wenn die Rutschgrenze entsprechend herabgesetzt und damit die Sicherheit s gegenüber einem Durchrutschen verringert wird. Dies wird durch die zusätzliche Beaufschlagung des Druckkörpers 5 gegensinnig zu den Kupplungsfedern 8 erreicht. Eine über das Drehmoment lineare Herabsetzung der Rutschgrenze ist in der Fig. 5 durch die Linie 20 veranschaulicht, deren Verlauf über das Steuerventil 15 an die jeweiligen Anforderungen angepaßt werden kann.

Da es hinsichtlich der Wirkungsweise nicht darauf ankommt, mit welchen Mitteln die zu den Kupplungsfedern 8 gegensinnige Beaufschlagung des Druckkörpers 5 erreicht wird, kann diese Beaufschlagung auch auf sehr unterschiedlichen Wegen erreicht werden, beispielsweise über eine entsprechende Beaufschlagung des Kolbens 4 oder eine Beaufschlagung des Druckkörpers 5 mit elektromagnetischen Kräften, die in Abhängigkeit von der Motorbelastung und ausgesuchten Betriebsparametern gesteuert werden. Hiefür könnte beispielsweise die Stellung der Drosselklappe 21 im Ansaugrohr 14 herangezogen werden.

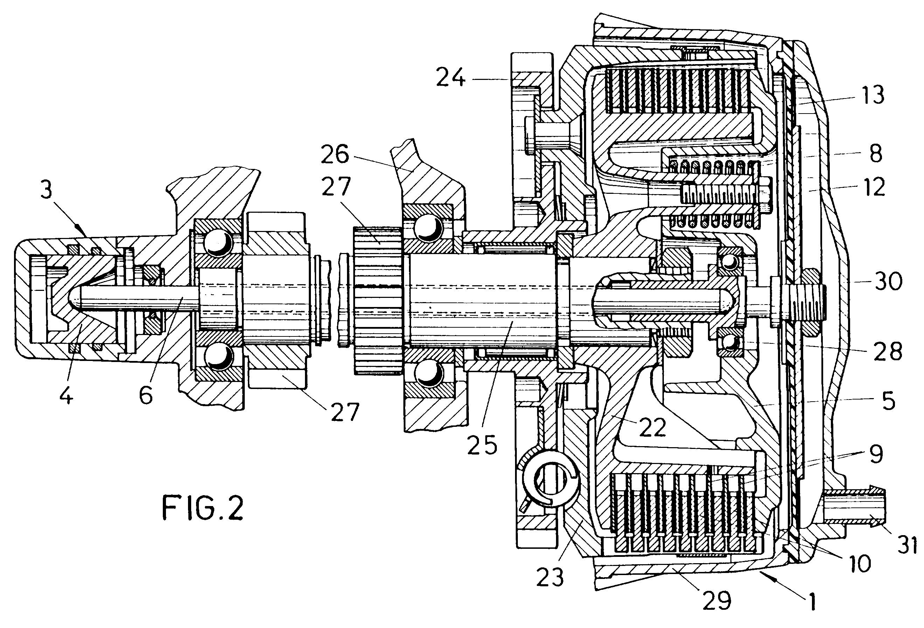

In der Fig. 2 ist ein Ausführungsbeispiel einer erfindungsgemäßen Schaltkupplung 1 näher dargestellt. Die ineinandergreifenden Lamellen 9 und 10 sind in einem Innenkorb 22 und einem Außenkorb 23 gehalten. Der Außenkorb 23, der über ein Zahnrad 24 mit einem Zahnrad auf der Kurbelwelle des Motors kämmt, ist auf einer Welle 25 frei drehbar gelagert, die den Innenkorb 22 drehfest trägt.

Diese in einem Gehäuse 26 gelagerte Welle 25 wird durch die Vorgelegewelle eines Schaltgetriebes verbunden, dessen Eingangszahnräder mit 27 bezeichnet sind. Durch die hohle Welle 25 ist die Stellstange 6 für den Druckkörper 5 geführt, so daß bei einer Beaufschlagung des Kolbens 4 der Ausrückeinrichtung 3 der Druckkörper 5 über ein Drehlager 28 in üblicher Weise gegen die Kraft der Kupplungsfedern 8 von den Lamellen 9 und 10 abgehoben werden kann. Bei einer Entlastung des Kolbens 4 wird die Schaltkupplung 1 über die Kupplungsfedern 8 wieder eingerückt.

Zum Unterschied von herkömmlichen Schaltkupplungen dieser Art bildet das Kupplungsgehäuse 29 stirnseitig eine durch eine Membran 13 abgeschlossene Unterdruckkammer 12, und zwar innerhalb eines Gehäusedeckels 30, der einen Anschluß 31 für eine Unterdruckleitung 32 zum Ansaugrohr 14 aufweist, wie dies in der Fig. 1 dargestellt ist. Da die Membran 13 mit dem Druckkörper 5 über das Drehlager 28 zugfest verbunden ist, wird der Druckkörper 5 entgegen der Schließkraft der Kupplungsfedern 8 in Abhängigkeit von der Motorbelastung beaufschlagt, was mit einer entsprechenden Herabsetzung der Rutschgrenze verbunden ist, wie dies bereits näher erläutert wurde.

## Patentansprüche

1. Schaltkupplung (1) für ein Motorrad mit ineinandergreifenden, einem Innen- und einem Außenkorb (22 bzw. 23) zugeordneten Lamellen (9, 10) und mit einer Ausrückeinrichtung (3) für einen durch wenigstens eine Kupplungsfeder (8) belasteten Druckkörper (5) zur Kraftbeaufschlagung der Lamellen (9, 10), dadurch gekennzeichnet, daß der Druckkörper (5) über eine Steuereinrichtung (11) in Abhängigkeit von der Motorbelastung mit einer zur Schließkraft der Kupplungsfeder (8) gegensinnigen Kraft beaufschlagbar ist.

2. Schaltkupplung nach Anspruch 1, dadurch gekennzeichnet, daß die Beaufschlagungskraft für den Druckkörper (5) zusätzlich in Abhängigkeit eines Betriebsparameters, beispielsweise in Abhängigkeit von der Stellung einer Getriebegangschaltung, der Drehzahl des getriebenen Hinterrades oder der Motordrehzahl, steuerbar ist.

3. Schaltkupplung nach Anspruch 1 oder 2, dadurch gekennzeichnet, daß die Steuereinrichtung (11) aus einer an ein Ansaugrohr (14) des Motors angeschlossenen, über einen Kolben oder eine Membran (13) am Druckkörper (5) angreifenden Unterdruckkammer (12) besteht.

4. Schaltkupplung nach den Ansprüchen 2 und 3, dadurch gekennzeichnet, daß zwischen dem Ansaugrohr (14) und der Unterdruckkammer (12) ein Steuerventil (15) vorgesehen ist.

5. Schaltkupplung nach einem der Ansprüche 1 bis 4, dadurch gekennzeichnet, daß das Gehäuse (29) der Schaltkupplung (1) einen Unterdruckraum (12) bildet, der durch eine mit dem Druckkörper (5) über ein Drehlager verbundene Membran (13) abgeschlossen ist.

6. Schaltkupplung nach Anspruch 5, dadurch gekennzeichnet, daß der Unterdruckraum (12) zwischen einem Gehäusedeckel (30) und der Membran (13) gebildet ist.

## Claims

1. A clutch (1) for a motorcycle with inter-engaging discs (9, 10) associated with an inner and an outer cage (22; 23), and with a disengaging device (3) for a pressure member (5) loaded by at least one clutch spring (8) for applying force to the discs (9, 10), characterised in that the pressure member (5) is adapted to be subjected to a force in opposition to the closing force of the clutch spring (8) via a control device (11) in dependence on the engine load.

2. A clutch according to claim 1, characterised in that the force for application to the pressure member (5) is controllable additionally in dependence on an operating parameter, for example in dependence on the position of a gear shift, the speed of the driven rear wheel, or the engine speed.

3. A clutch according to claim 1 or 2, characterised in that the control device (11) consists of a negative pressure chamber (12) which is connected to an intake pipe (14) of the engine and which acts on the pressure member (5) via a piston or a diaphragm (13).

4. A clutch according to claims 2 and 3, characterised in that a control valve (15) is provided between the intake pipe (14) and the negative pressure chamber (12).

5. A clutch according to any one of claims 1 to 4, characterised in that the housing (29) of the clutch (1) forms a negative pressure chamber (12) which is sealed off by a diaphragm (13) connected to the pressure member (5) via a pivot bearing.

6. A clutch according to claim 5, characterised in that the negative pressure chamber (12) is formed between a housing cover (30) and the diaphragm (13).

## Revendications

1. Embrayage (1) pour motocyclette, avec des lamelles (9, 10) s'engageant les unes dans les autres, associées à un panier intérieur et à un panier extérieur (22, respectivement 23), et avec un dispositif de débrayage (3) pour un corps de pressage (5) chargé par au moins un ressort d'embrayage (8), pour solliciter par une force les lamelles (9, 10), caractérisé en ce que le corps de pressage (5) est susceptible d'être sollicité, par l'intermédiaire d'un dispositif de commande (11), en fonction de la charge moteur, avec une force orientée en sens opposé de la force de fermeture du ressort d'embrayage (8).

2. Embrayage selon la revendication 1, caractérisé en ce que la force de sollicitation du corps de pressage (5) est susceptible d'être en plus commandée en fonction d'un paramètre de fonctionnement, par exemple en fonction de la position d'un changement de vitesse, de la vitesse de rotation de la roue arrière entraînée, ou de la vitesse de rotation du moteur.

3. Embrayage selon la revendication 1 ou 2, caractérisé en ce que le dispositif de commande (11) est constitué d'une chambre à dépression (12), raccordée à un tube d'aspiration (14) du moteur, agissant sur le corps de pressage (5) par l'intermédiaire d'un piston ou d'une membrane (13).

4. Embrayage selon les revendications 2 et 3, caractérisé en ce qu'une valve de commande (15) est prévue entre le tube d'aspiration (14) et la chambre à dépression (12).

5. Embrayage selon l'une des revendications 1 à 4, caractérisé en ce que le carter (29) de l'embrayage (1) constitue une chambre à dépression (12), fermée au moyen d'une membrane (13) reliée au corps de pressage (5) par un palier à rotation.

6. Embrayage selon la revendication 5, caractérisé en ce que la chambre à dépression (12) est constituée entre un couvercle de carter (30) et la membrane (13).
